# EUROPEAN PATENT APPLICATION

(11) **EP 1 496 693 A1**
(43) Date of publication of application: **12.01.2005**
(21) Application number: 03015289.6
(22) Date of filing: 07.07.2003
(51) Int. Cl.: H04N 5/50

(54) **Method for tuning a television receiver set**

(71) Applicant: MATSUSHITA ELECTRIC INDUSTRIAL CO., LTD., Kadoma-shi, Osaka 571-8501 (JP)
(72) Inventor: Fricke, Thomas, 38461 Danndorf (DE); Räth, Detlef, 31234 Edemissen (DE)
(74) Representative: Lins, Edgar, Dipl.-Phys. Dr.jur.

(57) **Abstract**

For enabling a direct switch from any television program received by a television set to an actually preferred program, a method for tuning a television set to a certain programme selected from a multiplicity of programs is characterised by marking a selected programme as main program and by directly tuning from any different program to said marked main program by a specific switching means.

## Description

The invention relates to a method for tuning a broadcast receiver set to a certain program selected from a multiplicity of programs.

Broadcast receiver sets, especially TV sets, have been arranged to enable a selection of a broadcast station (program) as quick as possible. The different programs are related to different program numbers which may be directly selected at the control device, which is normally a remote control device. Since, however, the number of television programs which may be received by a broadcast receiver set have been increased considerably there may be a problem to memorise all the possible program numbers by an operator of the broadcast receiver set.

Furthermore, it has become more and more common to use advertisement breaks for switching over to different television programs in order to obtain information of the program contents of other stations said switching over is called "zapping". If the operator has zapped through a greater number of different programs he will have the intention to switch back to his original program in order to see whether or not the advertisement break has already ended and the more interesting program content, e.g. a movie, will be continued. For this, the operator has to remember the correct program number. Due to long advertisement breaks the operator may have forgotten the program number the watching of which he wish to continue. In this case he is forced to have a look into a program list or to search through a greater number of television programs which may consume so much time that he may miss a part of the program content he is interested in.

It is the object of the present invention to broaden the possibilities of controlling a broadcast receiver set, especially a television set for switching between several broadcast programs. According to the present invention this object is achieved by a method as mentioned above which is characterised by marking a selected program as a main program and by directly tuning from any different program to said marked main program by a specific switching means.

The basic concept of the present invention consist in the marking of the main program so that the main program is stored and may be directly tuned in. Consequently, the broadcast receiver set may be directly reset to a main program from any different program received by the receiver set. By said specific switching means a resetting to the main program is possible independently from the program to which the receiver set was tuned before.

In accordance with the present invention there is a dynamic adaptation of the receiver set to the actual user by marking or storing, respectively, a presently interesting program as a main program to which the receiver set may be easily and directly re-switched from any other program. Therefore, the concept of the present invention is different from former concepts aiming an easier control of the receiver set, e.g. by means of sorting TV stations according to the user's preferences.

The marking of a main program in accordance with the present invention may be valid for a short time only and may be replaced at any time by marking a different program as a main program.

The marking as a main program may be performed automatically by the receiver set, if a program has been tuned in for a minimum duration, e.g. ten minutes without switching to a different program.

Alternatively, the marking as a main program may be performed through a marking signal initiated at a control device of the receiver set. The simplest way may consist in using a specific key of the control device the pressing of which leads to the marking of the presently tuned program as the main program. Of course, the use of a specific key may be replaced by using a key combination, e.g. of already present keys of the control device, in order to mark a main station.

Similarly, said direct tuning to the marked main program may be performed by a reset signal being independent from a tuned or marked program and being triggered at a control device, preferably by a key action. Said key action again may be the pressing of a specific key or a predetermined combination of keys.

A modification of the present invention is performed by marking a further program as a second main program and by directly switching between both main programs. In this embodiment of the invention two programs may be followed intermittently which may often be the case for parallel sport events or other events which do not require a persistent uninterrupted attention, in order to get the interesting pieces of information.

The marking of the second main program may also be performed automatically by the receiver set after the marking of a first main program by marking a program as said second main program which had been tuned in before a reset to said first main program.

As an alternative the marking of said second main program may be initiated by a key action at said control device.

It is preferred to allow the marking of a program as second main program only after the marking of a different program as said first main program has been completed. In this case the marking of the second main program may be performed by the same key action as the marking of the first main program.

The present invention is preferably used with television sets.

The possibility of watching two interesting TV programs by directly switching between two main programs may preferably be implemented in a television set having tuner sections where the two tuner sections are tuned to said two main programs. In this case it is preferred to display one of said main programs as a full picture on a display screen whereas the other main program is displayed as "picture in picture", i.e. on a much smaller scale within the full picture of the other main program.

The invention will be more fully described with reference to the attached drawings in which
- Figure 1 -: shows a schematic view of a first embodiment of the invention and
- Figure 2 -: shows a schematic view of a second embodiment of the invention.

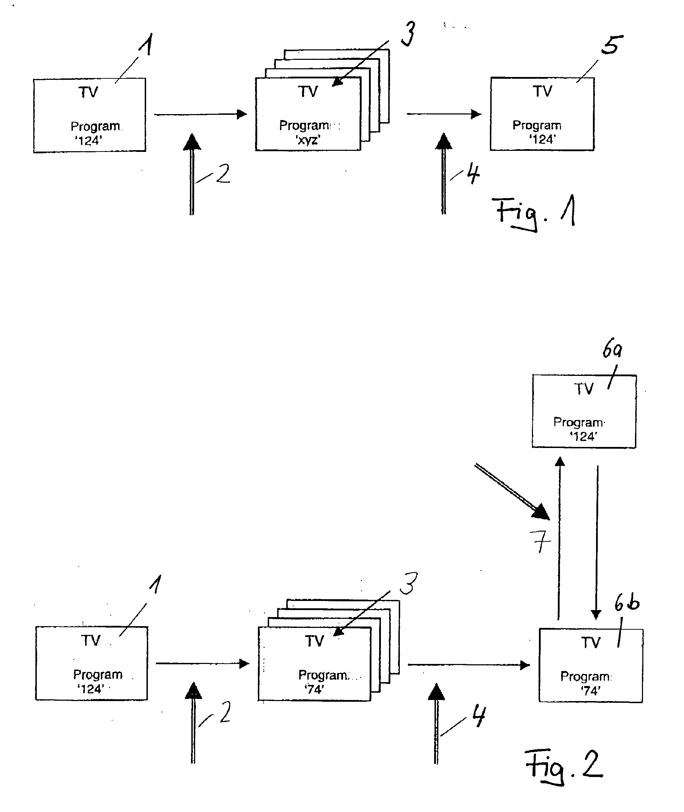

Figure 1 shows a first block 1 representing a program to which a television set is tuned, e.g. a program having the program number 124.

The arrow 2 represents the marking and storing of said tuned program 124 as a main program.

As explained, said marking may be performed automatically after the lapse of a predetermined duration or may be performed by a key action at a control device of the television set.

After said marking of the program 124 as a main program the user may tune the television set to a number of different programs, e.g. during an advertisement break, in order to get an overview for the contents of the simultaneous different programs. Switching to the different programs is illustrated at 3. The last tuned program may be program XYZ when the user would like to return to the original program 124. For this the user initiates a key action 4 at the control device, in order to return to the marked main program, namely program 124. The control device controls the tuning section so that the originally tuned television program 124 is again tuned in, as indicated at 5.

According to the present invention due to the marking of program 124 as a main program it has become possible to switch over to different programs and to directly and immediately return to the marked main program 124 which program ever had been tuned in before the resetting signal 4 has been initiated, preferably by means of key action.

The embodiment of figure 2 shows the same steps of viewing program 124 (1), marking said program as a main program (2) and then switching to other different programs (3), e.g. during an advertisement break of the originally watched program 124.

In this embodiment, if the switching back to the first main program 124 is initiated, e.g. by a key action 4, the last program 74 tuned in during the switching to different other programs is automatically marked and stored as a second main program 6b. By means of a key action 7 switching back and forth between the first main program 6a (program number 124) and the second main program 6b (program number 74) is possible, e.g. to watch both programs alternately.

As a modification the marking 4 of the second main program 6b may be controlled by a key action or by a time control, similar to the described alternative for the marking of the first main program.

It goes without saying that as a further modification the marking of a third main program may be provided for. The number of main programs, however, should be limited, in order to keep the advantage of an easy handling and control of the television set.

## Claims

1. Method for tuning a broadcast receiver set to a certain program selected from a multiplicity of programs, **characterised by** marking a selected program as main program and by directly tuning from any different program to said marked main program by a specific switching means.

2. Method according to claim 1, **characterised in that** said marking as a main program is performed automatically by said broadcast receiver set, if a program has been tuned in for a minimum duration.

3. Method according to claim 1 or 2, **characterised in that** said marking as a main program is performed through a marking signal initiated at a control device of the broadcast receiver set.

4. Method according to one of the claims 1 to 3, **characterised in that** said direct tuning to the marked main program is performed by a reset signal being independent from a tuned or marked program and triggered at a control device of the broadcast receiver set.

5. Method according to claim 3 or 4, **characterised in that** said marking signal and/or said reset signal is triggered by a corresponding key action of said control device.

6. Method according to one of the claims 1 to 5, **characterised by** marking a further program as a second main program and by directly switching between both main programs.

7. Method according to claim 6, **characterised by** after marking of the first main program automatically marking a program as a second main program which had been tuned in before resetting to said first main program.

8. Method according to claim 6 or 7, **characterised in that** marking of said second main program is initiated by a key action at said control device.

9. Method according to one of the claims 6 to 8, **characterised in** marking of a program as second main program is enabled only after the marking of the different program as said first main program.

10. Method according to claim 9, **characterised in that** marking of the second main program is performed by the same key action as the marking of the first main program.

11. Method according to one of the claims 6 to 10, **characterised in that** with a broadcast receiver set having two tuner sections the two tuner sections are tuned to the two main programs.

12. Method according to claim 11 wherein said broadcast receiver set is a television set, **characterised in that** one of said main programs is displayed as a full picture on a display screen whereas the other main program is displayed as picture in picture.
